(19)

Europäisches Patentamt
European Patent Office
Office européen des brevets

(11) **EP 4 439 458 B1**

(12) **EUROPEAN PATENT SPECIFICATION**

(45) Date of publication and mention
of the grant of the patent:
**22.07.2026 Bulletin 2026/30**

(21) Application number: **23165350.2**

(22) Date of filing: **30.03.2023**

(51) International Patent Classification (IPC):
**G06T 7/187** (2017.01)       **G06T 7/11** (2017.01)

(52) Cooperative Patent Classification (CPC):
**G06T 7/187; G06T 7/11;** G06T 2207/10081;
G06T 2207/10088; G06T 2207/10104;
G06T 2207/10108; G06T 2207/10116;
G06T 2207/30048

(54) **METHOD FOR THE ASSISTANCE OF VISUALIZATION OF ONE OR MORE ABLATION TARGET AREAS IN A TISSUE OF AN ORGAN**

VERFAHREN ZUR UNTERSTÜTZUNG DER VISUALISIERUNG EINES ODER MEHRERER ABLATIONSZIELBEREICHE IN EINEM GEWEBE EINES ORGANS

PROCÉDÉ D'AIDE À LA VISUALISATION D'UNE OU PLUSIEURS ZONES CIBLES D'ABLATION DANS UN TISSU D'UN ORGANE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**02.10.2024 Bulletin 2024/40**

(73) Proprietor: **Inheart**
**33600 Pessac (FR)**

(72) Inventors:
• **KABONGO, Luis**
**33600 PESSAC (FR)**
• **PEYRAT, Jean-Marc**
**33600 PESSAC (FR)**

(74) Representative: **Aquinov**
**35, Rue Tourat**
**33000 Bordeaux (FR)**

(56) References cited:
• **NUÑEZ-GARCIA MARTA ET AL: "Mind the gap: Quantification of incomplete ablation patterns after pulmonary vein isolation using minimum path search", MEDICAL IMAGE ANALYSIS, OXFORD UNIVERSITY PRESS, OXOFRD, GB, vol. 51, 10 October 2018 (2018-10-10), pages 1 - 12, XP085544956, ISSN: 1361-8415, DOI: 10.1016/ J.MEDIA.2018.10.001**

• YUSHKEVICH P A ET AL: "User-guided 3D active contour segmentation of anatomical structures: Significantly improved efficiency and reliability", NEUROIMAGE, ELSEVIER, AMSTERDAM, NL, vol. 31, no. 3, 1 July 2006 (2006-07-01), pages 1116 - 1128, XP024906402, ISSN: 1053-8119, [retrieved on 20060701], DOI: 10.1016/ J.NEUROIMAGE.2006.01.015

• LATCU DECEBAL GABRIEL ET AL: "Electroanatomic characteristics of the mitral isthmus associated with successful mitral isthmus ablation", EUROPACE, vol. 18, no. 2, 23 December 2015 (2015-12-23), GB, pages 274 - 280, XP093078128, ISSN: 1099-5129, DOI: 10.1093/europace/euv097

EP 4 439 458 B1

**Description**

The present invention relates to the field of computer assisted medical diagnosis. More particularly, the invention relates to a computer-implemented method for the assistance of visualization of one or more ablation target areas in a tissue of an organ.

Cardiomyopathies and scarring might cause cardiac arrhythmias, as ventricular tachycardia (VT) or atrial fibrillation (AF). The scar from a cardiomyopathy, for instance from a previous heart attack, might form abnormal electrical circuits within the heart, which causes VT.

It is known to treat arrhythmias with an invasive catheter-based ablation. This ablation consists of inserting a catheter into the heart through veins or arteries to burn an area of the heart tissue that is causing arrhythmias. This procedure requires an assessment of the cardiac region contributing to the fibrillation and subsequently cauterizing a region of cardiac muscle to disrupt the arrhythmia. Even if this procedure is commonly used, it carries risks due to its invasive nature, its complexity, and its length.

In this context, it is known to prepare the intervention with a virtual 3D model of the organ. Such virtual 3D model is generally built from a 3D image of the organ, obtained from a medical imaging method, such as computed tomography or CT-scan, fluoroscopy, or MRI. The 3D image is processed to obtain a set of vertices which define a 3D model of the organ. The processing of the 3D image can also highlight features of the organ which can help the surgeon to detect medical intervention targets. For instance, the application EP3622478 from the applicant discloses a method for computing a 3D model of a patient's heart, and wherein the myocardial thickness is modelized to identify low thickness areas, or channels, in the myocardial wall. Such channels might be representative, directly, or indirectly and partly, or fully, of the presence of arrythmias. NUÑEZ-GARCIA MARTA ET AL: "Mind the gap: Quantification of incomplete ablation patterns after pulmonary vein isolation using minimum path search" (Medical Image Analysis, Oxford University Press, Oxford, GB, vol. 51, 10 October 2018, pages 1-12, ISSN: 1361-8415, DOI: 10.1016/J.MEDIA.2018.10.001) discloses a semi-automatic method for detecting and quantifying ablation gaps.

Using such virtual 3D model, a cardiac ablation can be prepared beforehand by the surgeon, with visualizing these channels so as to delineate manually ablation area targets. However, the surgeon is generally used to identify ablation area targets from electrical data, such as electrocardiograms (ECG). When exposed to a virtual 3D model, he must interpret various parameters to achieve determining a suitable region for ablation. Thus, the preparation of the intervention from a virtual 3D model might lead to incorrect or inaccurate delineation of ablation area targets, increasing therefore the risk of reappearance of arrhythmias further to the intervention.

Considering the above, there is therefore a need for a method for a computer-implemented method helping a surgeon to visualize ablation target areas in a virtual 3D model of a tissue of an organ.

The object of the present invention is to answer to this need.

For this purpose, the subject of the invention is a computer-implemented method for the assistance of visualization of one or more ablation target areas in a tissue of an organ, the method comprising:

a. step of receiving at least one mapping of points representing said tissue, each point of said mapping of points being labelled with a classification of at least one type of tissue at said or around point position and/or with a value of at least one first parameter indicating a local characteristic of said tissue at or around said point position;

b. step of segmentation of the mapping of points from said first parameter values and/or from said classifications to identify at least two regions of interest in said mapping of points, each region of interest corresponding to an area of said tissue matching a predefined electrical conductivity criterion;

c. step of computing, for each point of at least a set of points of said mapping of points, a score depending on a length of the shortest path joining the closest regions of interest to said point and passing by said point, said length being computed considering at least the first parameter value of said point and/or the classification of said point;

d. step of generation of a model of said tissue comprising at least said set of points and said scores and/or one or more ablation target areas determined from set of points and said scores.

According to the invention, a mapping of points of the tissue is supplied. This mapping of points might result from one or more imaging and/or mapping techniques of the tissue, from which a 3D representation of all or part of the tissue is obtained. The 3D representation is associated to local features which are representative, directly, or indirectly and partly, or fully, of the presence or the absence of arrythmias. These local features might be physiological, geometrical, electrical and/or structural characteristic, resulting directly from computing on the mapping of points and/or from another data acquisition technique.

An example of local characteristic might be the thickness of the tissue, for instance determined with measuring the distance separating closest points of inner and outer surface of the tissue. In the case of a wall of the heart, as the myocardium, the thickness of the wall may help to identify morphological isthmuses, i.e., areas having a thickness lower than the thickness of adjacent zones, which might be responsible of arrhythmias. An example of classification might be the cellular composition of the tissue. For example, in the case of some cardiac diseases, part of the muscular tissue is replaced by adipocytes or by calcified structures; such structural changes tend to weaken the thickness of the heart well.

Thus, the mapping of points is automatically segmented, from its local features, to delineate at least a pair of regions of interest in the tissue which might indicate the presence of a region in the tissue to be ablated. For instance, these regions of interest might be delineated as being adjacent areas with a same thickness and separated with an area of lower thickness. An ablation target area can then be suggested with determining the closest points to this pair of regions of interest. According to the invention, instead of using a simple distance metric to identify these closest points, the distance of a path joining a point to the pair of regions of interest is weighted using the local features of the mapping of points, resulting in the computing of a score rather than a simple distance. The spatial distribution of these scores on the mapping of points thus define a full score map superimposed to the mapping of points or partial score maps each associated to a pair of regions of interest or even simple lines or curves each joining a pair of regions of interest.

The computed scores indicate therefore shortest weighted paths that join adjacent regions of interest and might be then processed to identify the ablation target area, which can be integrated to a virtual 3D model of the tissue construed from the mapping of points and displayed to the surgeon to help him preparing the intervention.

When considering cardiac ablation, it is possible to define an ablation target area, extending in the lower thickness area, considering the local features of the mapping of points. As an example, an ablation target area might be identified with searching the shortest line or curve joining the pair of regions of interest and encompassing the thinner points of lower thickness area and/or points with strong thermal and/or electrical insulating properties and/or which avoid points close to a risk area.

In the context of the present specification, unless expressly provided otherwise, a "computer" may refer, but is not limited to, a desktop computer, a laptop computer, a tablet computer, a piece of testing equipment, a network appliance, a controller, a digital signal processor, a computational engine within an appliance, a consumer-electronic device, a portable computing device, and/or another electronic device, and/or any combination thereof appropriate to the relevant task at hand. Moreover, the method steps might be all executed on a same device. As a variant, the method steps might be executed on several devices, connected by wires or by a wireless connection.

In the context of the present specification, unless expressly provided otherwise, a "mapping of points of a tissue" is a set of points digitally representing this tissue, said points can be encoded computationally by sequences or lists of numerical values, in particular sequences of at least one numerical value representing the coordinates of said points in a particular reference. The coordinates can be specified in any type of chart, for instance in cartesian, spherical cylindrical coordinates or any other type of geometrical chart in one, two or three spatial dimensions. A mapping of points might be 2D mapping of points or a 3D mapping of points.

A 3D mapping of points might be a 3D model of the organ, namely one or more structured mesh, each comprising a plurality of vertices connected with each other to define a plurality of faces and/or volumes which approximate internal and/or external surfaces and/or volumes of all or part of the organ. A 3D model might be a triangle mesh or a quadrilateral mesh, or more generally a polygonal mesh, which comprises a plurality of vertices, with edges connecting pairs of vertices and/or polygonal faces connecting a closed set of vertices. As a variant, a 3D model might be a tetrahedral mesh or a hexahedral mesh or a prism mesh, or more generally a volume mesh, which comprises a plurality of vertices, with polyhedrons connecting a closed set of polygons defined by closed set of vertices. Preferably, each vertex and/or edge and/or polygon and/or polyhedron might be labelled as being a part of a specific sub-part of the organ. A 3D model might be stored as a list of vertices each associated with spatial coordinates and with a set of connections to other vertices, or as a list of vertices associated with spatial coordinates and a list of polygons or faces each defined by a subset of vertices contained in said list of vertices, being understood that any other suitable method of storage might be used in the context of the present specification.

A 3D mapping of points might be an unstructured set of points, namely a point cloud, where each point might be or not connected to another point of the point cloud.

In the context of the present specification, said "3D mapping of points" might be (or might be computed from) one of, or a combination of two or more of : an electrophysiological map, resulting from an electrocardiogram (ECG) and/or from invasive mapping, an anatomical and/or a functional map, resulting from as a computed tomography(CT)-scan, a positron emission tomography(PET)-scan, a single photon emission computed tomography(SPECT)-scan or a magnetic resonance imaging(MRI)-scan, and an electro-anatomical map, resulting from an invasive mapping.

In the context of the present specification, unless expressly provided otherwise, a "classification of at least one type of tissue at a point position or around a point position" might be a class indicating the type of cells composing the tissue at or around a location corresponding said position and/or a class indicating the major type of cells composing the tissue at or around a location corresponding said position and/or a class indicating the proportion of the types of cells composing the tissue at or around a location corresponding said position. In the context of cardiac ablation, said type of tissue might be a muscle tissue, a fat tissue, or a calcified tissue.

In the context of the present specification, unless expressly provided otherwise, "a parameter indicating a local characteristic of said tissue at a point position or around a point position" might be an electrical, a physiological, a physical or a geometrical feature of an area of the tissue whose location corresponds to said position. In the context of cardiac ablation, an electrical feature might be an activation time, an electric potential, or a conduction velocity. A physiological feature might be a tissue density. A physical or a geometrical feature might be a tissue thickness, such as a myocardial thickness. It is understood that any other suitable local feature of the heart, which is representative, directly, or indirectly and partly, or fully, of the presence or the absence of arrythmias, might be used in the context of the present specification.

According to a first embodiment, the mapping of points comprises at least a mesh of a wall of the organ, said mesh being generated from one or more images of the organ, each vertex of said mesh is associated with at least one value of a local characteristic of the wall at the organ's point corresponding to this vertex and the segmentation step comprises the selection of a plurality of vertices of said mesh from their associated values, the segmented region being determined from said selected plurality of vertices.

According to one embodiment, the method comprises a preliminary step of acquiring a 3D image and/or recording a 3D image of a patient's organ, particularly his heart or a region of his heart, the mesh being computed from said 3D image. The 3D image may be acquired directly from an image acquisition device such as a CT-scan or MRI. Alternatively, the 3D image may be obtained from a recording medium on which it is stored, such as a local memory or a distant database, the 3D image having been acquired beforehand the method.

For example, the step of acquiring the 3D image can be performed by tomography. These techniques are also identified as CT-scan, PET-scan, SPECT-scan, or CAT-scan and are based on the measurement of X-ray absorption by the tissues of an organ. Tomography provides a plurality of 2D images each representing a slice of the organ, which are then combined to reconstruct the 3D image of the anatomical structure of the observed organ. The 3D image comprises a volumetric distribution of pixels, or voxels.

The method according to the invention can thus comprise a 3D modeling step of the 3D image of the organ to generate a 3D model forming then the mapping of points. The 3D modelling step comprises a modeling step of at least one layer or one wall of the organ shown in the 3D image, such as an inner face and an outer face of the layer of the organ. Said 3D model might be a mesh, especially a polygonal or a polyhedron mesh, of said layer, especially of said inner and outer faces.

According to the invention, a thickness value at a point position or around a point position might be determined with computing the distance between the inner face and the outer face at said position. A classification of the type of tissue at a point position or around a point position might be determined with considering the Hounsfield units encoding the radiodensity at said position.

In the context of the present specification, unless expressly provided otherwise, "an area of a tissue matching a predefined electrical conductivity criterion" might be any area of the tissue having an electrical conductivity lower than a given threshold and/or being defined by a border corresponding to a local gradient of electrical conductivity greater than a given threshold.

According to one embodiment, said segmentation step comprises a direct thresholding of the first parameter values of the points of said mapping of points, for instance following a comparison of their thickness to a thickness level, for example of 1mm, 2mm, 3mm, 4mm or 5mm.

According to a second embodiment, said segmentation step comprises an iterative decrease of an electrical conductivity threshold; and, for each iterative value of said electrical conductivity threshold, an identification step of two or more groups of points of said mapping of points, wherein each group of points is selected from their first parameter values and/or from their classifications so as to define an area of said tissue having an electrical conductivity lower than said iterative value of said electrical conductivity threshold, said iterative decrease of the electrical conductivity threshold being stopped when the border of each corresponding groups of points remains globally identical from the previous iteration to the current iteration, said corresponding groups of points thus defining said regions of interest. For instance, each region of interest is progressively identified with decreasing a thickness threshold until the region remains the same, meaning that this region has globally a same thickness, that the decreasing step required to further change the shape of this region is high and that the border of this region corresponds to a local gradient of electrical conductivity greater than a given threshold.

According to a third embodiment, said segmentation step might be implemented from any suitable region growing method, with considering points labelled with a first parameter value lower than a given threshold as seed points and recursively considering neighbors of these points with estimating whether they should be considered as part of a region of interest upon their first parameter values.

Whatever the embodiment considered, a region of interest identified within the mapping of points might be modified, for instance with smoothing or eroding its border, or declassified as region of interest.

For instance, the method according to the invention might comprise a step of detecting, for each pair of regions of interest, at least one region of higher thickness comprised between these regions of interest. Optionally, the method according to the invention comprises a step of classifying each intermediate region extending between two regions of interest by means of:

a. the thickness of this intermediate region, compared to the thickness of the two adjacent regions of interest,

b. the width of this intermediate region, formed by the spacing of said adjacent regions of interest,

c. the length of this intermediate region, defined by the arrangement of adjacent regions of interest,

d. the topology of the entrance and/or exit of said intermediate region, such as the funnel formed by the two adjacent regions of interest.

Upon said classification, said adjacent regions might be confirmed or declassified as regions of interest. One can note that several geometric criteria might be taken together and combined in order to refine the classification of regions of interest.

According to an embodiment, the step of computing the score associated with a point of said set of points comprises a step of computing the length of the shortest path joining said point to the two closest regions of interest to said point, the length of a path being weighted by at least the first parameter values and/or the classification of the points of the mapping of points through which said path encompasses.

As an example, a shortest path joining a point to the two closest regions of interest to said point might be a line or curve joining this point to a geometrical center or a barycenter of each of the two closest regions of interest.

In an embodiment, the step of computing the length of the shortest path joining said point to the two closest regions of interest to said point might be implemented with a direct estimation of said shortest path followed by a computation of its length, said direct estimation being implemented with any suitable algorithm for finding the shortest path between two nodes in a weighted graph, wherein each node of said graph is formed by a point of the mapping of points and wherein the weight of each node depends on at least the first parameter values and/or the classification of the point corresponding to this point. As a variant, the step of computing the length of the shortest path joining said point to the two closest regions of interest to said point might be implemented with the computation of the length of each path joining said point to the two closest regions of interest to said point, followed by the selection of the path having the shortest length.

According to one embodiment, said first parameter value associated to a point of said mapping of points indicates a local thickness of said tissue at or around said point position. Then, when computing the length of a path, the weight attributed to a first point being associated with a first parameter value indicating a first thickness is higher than the weight attributed to a second point being associated with a first parameter value indicating a second thickness lower than the first thickness. In this way, the shortest path joining a point to a pair of regions of interest will preferably pass by the thinner points of the area between these regions of interest. If the score associated to this point is computed from this length or is directly this length, it directly indicates whether the corresponding area of the tissue has a chance to participate to the reappearance of an arrhythmia.

According to a second embodiment, said classification associated to a point of said mapping of points indicates the presence of fat, calcification and/or muscle in said tissue at or around said point position. Then, when computing the length of a path, the weight attributed to a first point being associated with a first classification indicating the presence of muscles is higher than the weight attributed to a second point being associated with a second classification indicating the presence of fat and/or calcification. In this way, the shortest path joining a point to a pair of regions of interest will preferably pass by the points of the area between these regions of interest which are composed only or mainly with calcification and/or fat or are composed of a greater proportion of calcification and/or fat than muscle. If the score associated to this point is computed from this length or is directly this length, it directly indicates whether the thickness of the corresponding area of the tissue is weaken and has a chance to participate to the reappearance of an arrhythmia.

According to a third embodiment, each point of said mapping of points is labelled with a value of a second parameter indicating the proximity of said point to a risk area. Then, the length of a path is weighted by the first and second parameters values of the points of the mapping of points through which said path encompasses and, when computing the length of the a path, the weight attributed to a first point being associated with a second parameter value indicating a first distance to a risk area is higher than the weight attributed to a second point being associated with a second parameter value indicating a second distance to said risk area lower than the first distance. Said value of the second parameter might indicate the distance of said point to a risk area or whether the distance of said point to a risk area is lower or higher than a given threshold. A "risk area" might be a vulnerable structure such as a part of the phrenic nerve, a part of the gastrointestinal tract, a part of a coronary artery, or a part of an implantable cardioverter defibrillator (ICD)-lead. In this way, the shortest path joining a point to a pair of regions of interest will preferably pass by the points of the area between these regions of interest which are the farthest to a risk area.

One can note that these embodiments might be taken together and combined in order to compute the length of the shortest path joining a point to the closest regions of interest to this point.

According to one embodiment, the length of a path is computed from a value of the arclength of said path. Advantageously, the computation of the arclength of said path may use weighted with coefficients depending on first parameter values, second parameter values and/or classifications assigned to the points of the mapping of points through which said path encompasses.

Without restriction of generality, the arclength formula can be written such that it takes the form of:

$$L(O) = \int_O 1\, dx$$

where the integration measure dx can be a continuous measure, such as the Lebesgue measure, or a finite measure such as the counting measure.

The arclength formula employed for the computation of the length of a path value may consider at least one penalization term which is a function of the different parameter values and classification conforming the model, said function may be nonlinear. In such a case, the arclength formula writes:

$$L(O) = \int_O F(C_1, \ldots, C_n)\, dx,$$

where F is a function of the parameter values and classification C1 up to Cn, and the integrand corresponds to the penalization term.

According to one embodiment, the length of a path joining a point to the closest regions of interest is computed with instantiating said arclength function value to 0, with traversing twice a set of points of the mapping of points from the point to each these closest regions of interest and with recursively computing a new value of said arclength value for each new traversed point, said new value being computed from the previous value of said arclength value and from the parameter values and classification assigned to said new traversed point. In this way, the arclength value of any path is computed iteratively over the points forming said path, the value of the arclength being updated recursively by adding the weighted contribution of consecutive voxels in the path until a given point of the closest regions of interest is reached.

Since arclength is defined as a weighted sum over the points forming said path, weights appearing in the arclength computation represent penalty or advantage coefficients indicating for each point of said path, the effective contribution to the arclength computation according to the parameter values and classification of said point.

In an embodiment, the step of scores computing might be implemented for any points of said mapping of points, resulting therefore in a full score map of the mapping of points. As a variant, the stop of scores computing might be implemented only for points of one or more defined research areas, which exclude the points of the regions of interest.

In an embodiment, the method comprises, prior to the step of scores computing and for each pair of regions of interest, a step of identification of the closest points of said mapping of points to said pair of regions of interest, each set of closest points associated to a pair of regions of interest defining a set of points on which the step of scores computing is implemented to obtain a score map of said set of points. Said closest points might be identified considering the distance to each point of the mapping of points to the geometrical center or the barycenter of each region of interest of said pair.

As a variant, said step of identification might be a step of identifying all the points of said mapping of points whose distance to each region of interest of said pair is lower than a given threshold.

In an embodiment, the method comprises, further to the step of scores computing, a step of determining from each score map, at least one ablation target area extending between said pair of regions of interest, said ablation target area comprises each point of said set of points associated to said pair of regions of interest whose score is lower than a predefined threshold. As a variant, said ablation target might comprises points of said set of points whose scores are the lowest.

In an embodiment, the method comprises a step of extension of at least one of the determined ablation target areas inside at least one of its associated regions of interest. As an example, the length of the extension of an ablation target area inside a region of interest might be manually defined, to take into account the dimensions of an ablation tool as a catheter. In this way, it is possible to extend the ablation target area inside a region of interest to define a safety margin.

In an embodiment, said model of the tissue might comprises the whole mapping of points and/or the regions of interest and/or the score maps.

In an embodiment, the method comprises a step of determination, for each of the determined ablation target area, of an ablation priority rank based on the scores of the set of points defining said ablation target area, said ablation priority rank being stored in the generated tissue model with being associated to said ablation target area. For instance, for each ablation target area, a global score can be computed from the scores of the corresponding set of points, for instance with averaging or summing said scores. Said ablation target areas can be then sorted based on their global scores, from the highest to the lowest, the rank of each ablation target area defining then said ablation priority rank.

In a second embodiment, said ablation priority rank might be determined from geometrical and/or topological features of the ablation target area and/or of the intermediate region between two regions of interest in which said ablation target area extends.

Said geometrical and/or topological features might be the thickness of this intermediate region, the width of this intermediate region, the length of this intermediate region and/or the topology of the entrance and/or exit of said intermediate region.

As a first example, a higher priority rank might be attributed to ablation targets which extend in intermediate regions having stronger thickness gradient with its adjacent regions of interest. As a second example, the priority rank of the ablation targets might be determined following a comparison of the ratio length over width of the intermediate regions in which these ablations targets extend. As a third example, the ablation targets might be sorted following the curvature of the entrance of the intermediate regions in which these ablations targets extend.

In a third embodiment, said ablation priority rank might be determined from an electrical simulation of the propagation of an electrical current in a generated model of a myocardial wall in which an ablation has been simulated at a location corresponding to said ablation target area. It is thus possible to determine the presence of at least one singular electrical propagation circuit, as a self-sustaining periodic circuit or a circuit comprising two loops, indicating the risk of the reappearance of an arrhythmia.

In an embodiment, the method according to the invention might comprise a step of displaying the generated model of said tissue on a display. Said scores or score map and/or said regions of interest and/or said ablation target areas might be displayed on the display with being superimposed to the mapping of points of said model.

If so, each ablation target area might be displayed with a visual feature, as a landmark or a color, depending on its ablation priority rank.

The present invention will be better understood, and other advantages will appear, on reading the detailed description of an embodiment taken by way of non-limiting example and illustrated by the appended drawings, in which:

> Figure 1 is a logic flow diagram that depicts a computer-implemented method, according to an embodiment of the invention;
> Figure 2 shows a schematic representation of a 3D mapping of points representing a tissue of an organ;
> Figure 3 shows a schematic representation of the result of a segmentation step of the method depicted in Figure 1 when implemented on the 3D mapping of points of Figure 2;
> Figure 4 shows a schematic representation of the result of a path determination step of the method depicted in Figure 1 when implemented on the 3D mapping of points of Figure 2;
> Figure 5 shows a schematic representation of the result of a score computation step of the method depicted in Figure 1 when implemented on the 3D mapping of points of Figure 2;
> Figure 6 represents a schematic view of a 3D model resulting from the method of Figure 1 when implemented on the 3D mapping of points of Figure 2.

The methods disclosed herein may also be implemented by software programs executable by a computer system. Further, implementations may include distributed processing and parallel processing, especially for processing in parallel several or all data in the data sets.

The illustrations described herein are intended to provide a general understanding of the structure of various embodiments. These illustrations are not intended to serve as a complete description of all the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the disclosure and the illustrations are to be considered as illustrative rather than restrictive, and the appended claims are intended to cover all such modifications, enhancements, and other embodiments, which fall within the scope of the description. Thus, the scope of the following claims is to be determined by the broadest permissible interpretation of the claims and their equivalents and shall not be restricted or limited by the foregoing description.

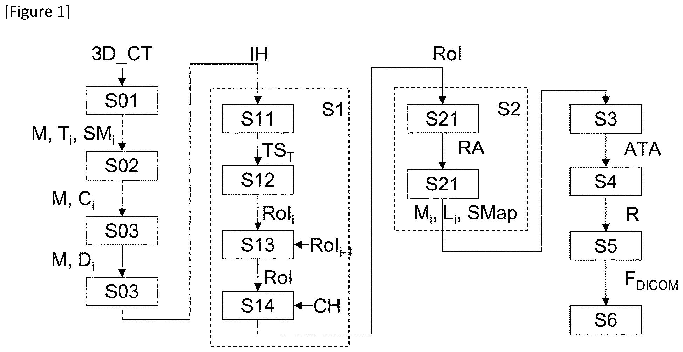

Reference is made to Figure 1 which shows a computer-implemented method for the assistance of visualization of one or more ablation target areas in a tissue of an organ. In the context of Figure 1, said organ is a patient's heart, said tissue is a myocardium of said heart and said ablation target areas are areas likely responsible of an appearance or a reappearance of arrhythmias.

In a preliminary step S01, a 3D image 3D_CT of the patient's heart has been acquired from a CT-scan method, and a 3D model IH of the patient's heart has been generated from the 3D image.

More precisely, an inner surface or layer and an outer surface or layer of the patient's heart myocardium have been modelized from the 3D image 3D_CT with defining a plurality of vertices of meshes representing said surfaces. This modeling results in a mesh M of the inner surface or layer or of the outer surface or layer of the myocardium, wherein each vertex $M_i$ of the mesh M is therefore labelled with the value of the thickness $T_i$ of the myocardium, meaning the thickness computed from these inner and outer surfaces or layers, at the location of the heart corresponding to the position of this vertex.

In the depicted example, these vertices have been segmented, according to their thickness. Said mesh M comprises then a plurality of superimposed sub-meshes $SM_i$, with each submesh corresponding to a thickness range of the myocardium.

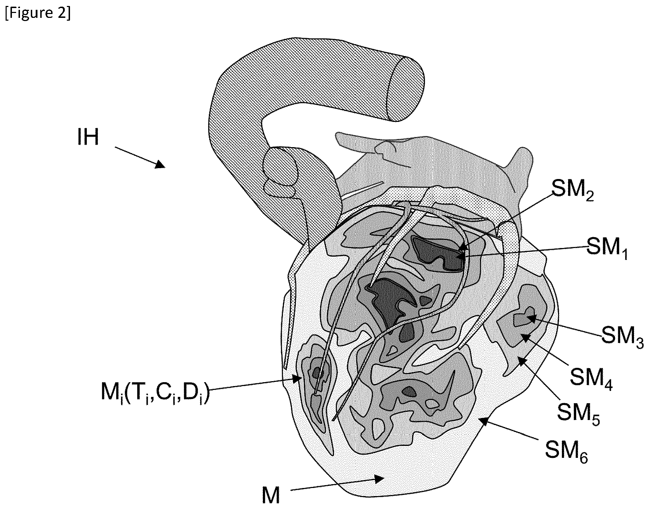

Reference is made to Figure 2 which shows an example of a 3D model IH. The model IH comprises a mesh M comprising six superimposed thickness sub-meshes $SM_1$ to $SM_6$ corresponding each to a range of myocardium thickness, namely 0mm to 1mm, 0mm to 2mm, 0mm to 3mm, 0mm to 4mm, 0mm to 5mm, and 0 to 6mm. For description conciseness, regions of lower thickness have been depicted darker than regions of greater thickness.

Moreover, in a further preliminary step 502, each point of the 3D image has been associated to a numerical value in terms of Hounsfield units encoding the radiodensity at said point. Since calcification type cells, fat type cells and muscle type cells do not present a same radiodensity, it is therefore possible to discriminate, for a slice of the myocardium at a defined location of the heart, the proportion of calcification, fat and muscle type cells composing said slice. Each vertex $M_i$ of the mesh M has been therefore labelled with a class $C_i$ indicating the major type of cells composing the myocardium at the location of the heart corresponding to the position of this vertex.

In the depicted example, said class $C_i$ is selected among classes $C_1$ "calcification tissue", $C_2$ "fat tissue" and $C_3$ "muscle tissue".

In a further preliminary step 503, regions have been detected and added as further meshes in the 3D model IH with being labelled as risk areas. It might be tubular structures, segmented from the 3D image 3D_CT, and which have been classified as being all or part of the coronary venous system, as the coronary sinus, veins, or arteries. It might be a part of the phrenic nerve which have been segmented from another 3D image of the patient, for instance acquired from an ultrasound scan or from a MRI scan of the patient. It might also be a part of the gastrointestinal tract or a part of an implantable cardioverter defibrillator (ICD)-lead.

Each vertex $M_i$ of the mesh M has been then labelled with a distance $D_i$ indicating the distance of the myocardium area, at the location of the heart corresponding to the position of this vertex, to the closest risk area to this location.

One can note that the steps S01 to S03 might be executed by another computing unit than the one used for the rest of the method. Moreover, steps S01 to S03 might be executed fully automatically by a computing unit or with a human assistance. The resulting 3D model IH might be stored on a recording medium, such as a memory of the computer or an external memory support or a distant database through which it is accessible to the computer.

In a step 504, the 3D model IH is provided to the computing unit of the computer.

In a step S1, at least two regions of interest RoI, which each matches a predefined electrical conductivity criterion, are segmented in said 3D model IH.

In the depicted example, said segmentation step S1 comprises an iterative decrease of an electrical conductivity threshold, being approximated here by a thickness threshold $TS_T$. Said thickness threshold $TS_T$ is thus progressively decrease, in a sub-step S11, from a maximum value, namely 6 mm, to a minimum value, namely 1 mm.

For each iterative threshold $TS_T$, in a sub-step S12, connected vertices $M_i$ of the mesh M whose thickness values $T_i$ are above this threshold are selected to define areas $RoI_i$ of the myocardium.

At each next iteration on said threshold $TS_T$, in a sub-step S13, the newly defined areas $RoI_i$ are compared with the previous defined areas $RoI_{i-1}$. When the border of a newly defined area $RoI_i$ remains globally the same than the corresponding previously defined area $RoI_{i-1}$, the iteration is stopped for this area and the set of connected vertices defining said area $RoI_i$ is classified as a region of interest RoI.

Each region of interest RoI resulting from the step S1 has then globally a same thickness and its border corresponds to a quick change of thickness toward its adjacent regions, meaning that this border corresponds to a local gradient of electrical conductivity greater than a given threshold.

As an undepicted variant, sub-steps S11 to S13 might be implemented with considering classes $C_i$ or distance values $D_i$ rather than thickness values $T_i$ of the vertices, or with considering a combination of these classes and values.

As a further undepicted variant, said segmentation step S1 might be replaced with a single thresholding of the thickness values $T_i$ of the vertices of the mesh M, for instance following a comparison to a given thickness level, for example of 1mm, 2mm, 3mm, 4mm or 5mm. As another undepicted variant, said segmentation step S1 might be replaced with any suitable region growing method, with considering vertices of the mesh M labelled with thickness values $T_i$ lower than a given threshold as seed points and recursively considering neighbors of these vertices with estimating whether they should be considered as part of a region of interest upon their thickness values $T_i$.

In an optional further sub-step S14, each region of interest RoI identified within the mesh M might be modified, for instance with smoothing or eroding its border, or declassified as region of interest.

The sub-step S14 might be, for instance, a step of detecting, for each pair of regions of interest RoI, at least one intermediate region of higher thickness CH comprised between these regions of interest RoI. Said detection might be followed by an estimation of one or more geometric and/or topographic parameters of this intermediate region as its thickness, its width, its length, the topology of its entrance and/or its exit.

Upon said detection and/or said estimation, one or both adjacent regions of interest RoI might be confirmed or declassified as regions of interest. In this way, it is possible to avoid false positives resulting from the sub-steps S11 to S13.

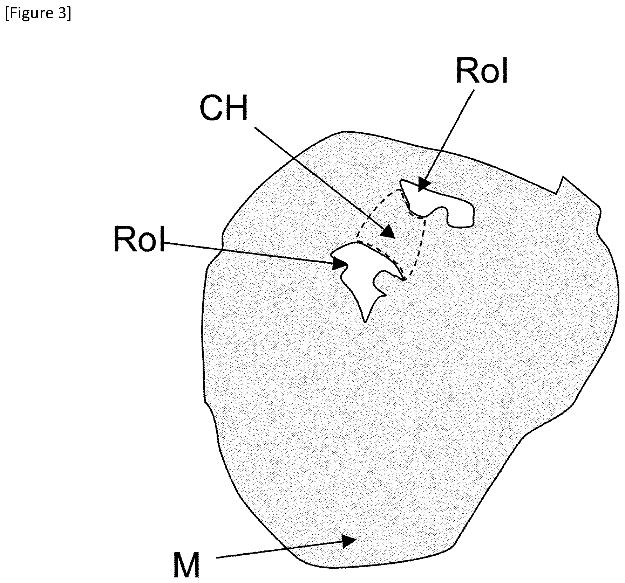

Reference is made to Figure 3 which shows an example of a pair of regions of interest RoI resulting from the segmentation of the mesh M according to the step S1.

In a step S2, scores are computed for any vertex lying in each research area RA which extends between two adjacent regions of interest RoI. Said scores indicate,

for each vertex, whether the corresponding area of the myocardium has a chance to participate to the appearance or the reappearance of an arrhythmia.

In a first sub-step S21, for each pair of adjacent regions of interest RoI, a research area RA is determined with identifying the closest vertices of the mesh M to the barycenter O of said pair of regions of interest RoI. The step S2 results then in the definition of partial score maps each corresponding to one of the research areas RA, without any overlap between these score maps. As a variant, said research area might be defined by any vertex of the mesh M whose distance to each region of interest RoI of said pair is lower than a given threshold, resulting in possible overlap between score maps.

As a variant, the step S2 might be implemented for any vertex of said mesh M, resulting therefore in a full score map of the mesh M.

In a second sub-step S22, for each vertex $M_i$ of the mesh M lying in a research area RA, a score is computed, said score corresponding to the length $L_i$ of the shortest path $PA_i$ joining the barycenters O of both closest regions of interest RoI from which said research area RA has been defined and passing by said vertex $M_i$.

More precisely, in the sub-step S22, the length $L_i$ of said shortest path $PA_i$ is computed from a value of the arclength of said path weighted with coefficients depending on the thickness values $T_j$, the distance values $D_j$ and the classes $C_j$ of the vertices $M_j$ of the mesh M through which said path $PA_i$ encompasses.

In the depicted embodiment, the length $L_i$ of a path $PA_i$ joining a given vertex $M_i$ to two regions of interest RoI is computed with instantiating said arclength function value to 0, and with firstly traversing the vertices $M_j$ lying in the research area RA from said vertex to one of the regions of interest RoI and with recursively computing a new value of said arclength value for each new traversed vertex $M_j$, said new value being computed from the previous value of said arclength value and from the values $T_j$, $D_j$ and class $C_j$ assigned to said new traversed vertex $M_j$. In this way, the arclength value of the path is computed iteratively over the vertices $M_j$ forming said path, the value of the arclength being updated recursively by adding the weighted contribution of consecutive vertices $M_j$ in the path until the barycenter O of the region of interest RoI is reached. This recursive update of the value of the arclength is then secondly implemented, starting from the last updated value and with traversing the vertices $M_j$ lying in the research area RA from said vertex $M_i$ to the other of the regions of interest RoI.

The weighted contribution of a vertex $M_j$ to the value of the arclength is determined from the values $T_j$, $D_j$ and class $C_j$ assigned to this vertex $M_i$.

More precisely:

   a. the weight attributed to a vertex $M_j$ with a first thickness value $T_j$ is higher than the weight attributed to a vertex $M_k$ with a second thickness value $T_k$ lower than the first thickness value $T_j$;

   b. the weight attributed to a vertex $M_j$ with a first class $C_3$, i.e. indicating the presence of muscles, is higher than the weight attributed to a vertex $M_k$ with a second class $C_1$ or $C_2$, i.e. indicating the presence of fat and/or calcification; and

   c. the weight attributed to a vertex $M_j$ with a first distance value $D_j$ is higher than the weight attributed to a vertex $M_k$ with a second distance value $D_k$ lower than the first distance value $D_j$.

Since the contribution of vertices $M_j$, to which larger weights have been attributed, to the arclength is higher than the contribution of vertices $M_k$ to which lower weight have been attributed, each shortest path $PA_i$ joining a given vertex $M_i$ to two regions of interest RoI tends to be the shortest path encompassing the vertices to which the smallest weights have been attributed. It is therefore possible, for a given vertex $M_i$, to identify the shortest path $PA_i$ among all the possible paths joining said vertex $M_i$ to two regions of interest RoI.

Considering the above-mentioned weight rules, each shortest path $PA_i$ tends to be the shortest path passing by the thinner vertices of the research area RA and/or the vertices of the research area RA which are composed mainly with calcification and/or fat and/or the vertices of the research area RA which are the farthest to a risk area.

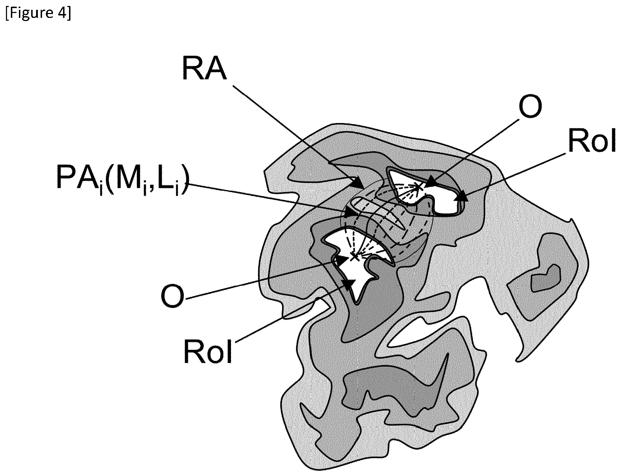

Reference is made to Figure 4 which shows several shortest paths $PA_i$ joining vertices lying in a research area RA to barycenters O of a pair of regions of interest RoI. Considering the method with which shortest paths $PA_i$ have been identified, one can note that all the vertices by which a shortest path $PA_i$ passes, join the barycenters 0 with this same shortest path $PA_i$.

On Figure 4, the length of a shortest path $PA_i$ is identified by the nature of the line with which it has been depicted, i.e. solid or dashed. In other words, the longer is the dash, the longer is the path $PA_i$. Moreover, the shortest $PA_i$ among all has been represented with a solid line.

The sub-steps S21 and S22 result then in a collection of length $L_i$ of path $PA_i$ each associated to one vertex of the research area RA. Thus, for a given vertex $M_i$, the length $L_i$ of its associated shortest path $PA_i$ is a score directly indicating whether the corresponding area of the myocardium has a chance to participate to the appearance or the reappearance of an arrhythmia. The collection of length $L_i$ forms a score map SMap.

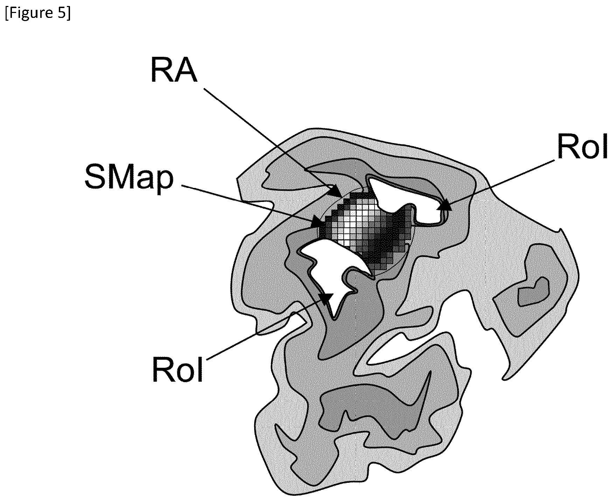

Reference is made to Figure 5 which shows a score map SMap, computed from the shortest paths $PA_i$ shown on Figure 4, which is superimposed on the research area RA. Vertices with scores of lower values (i.e. shorter lengths) are depicted whiter than vertices with scores of higher values (i.e. higher lengths).

In an optional step S3, an ablation target area ATA is identified from each score map SMap.

More precisely, all the connected vertices of the research area RA whose scores, i.e. the length $L_i$ of their associated shortest path $PA_i$, are the lowest define an ablation target area, namely an area in the intermediate region between two regions of interest RoI that can be considered as an area to be ablated by a surgeon to decrease the risk of an appearance or the reappearance of an arrhythmia.

One can note that the step S3 is optional and that the sole computation of score maps SMap might be enough for the surgeon to identify ablation target areas by himself.

In an optional step S4, an ablation priority rank R is determined for each ablation target area ATA.

For instance, for each ablation target area ATA, a global score can be computed from the scores $L_i$ of the vertices of the mesh M which define this ablation target area. The global score might result from the addition of the scores $L_i$ of all the vertices composing the ablation target area ATA or from the averaging of said scores $L_i$.

The ablation target areas ATA are then sorted based on their global scores, from the highest to the lowest and the rank of each ablation target area ATA after this sorting defines then the ablation priority rank R.

As a variant, the ablation priority rank R might be determined from geometrical and/or topological features of the intermediate region CH between two regions of interest RoI in which the related ablation target area ATA extends or from an electrical simulation of the propagation of an electrical current in a generated model of a myocardial wall in which an ablation has been simulated at a location corresponding to said ablation target area ATA.

In a step S5, the regions of interest RoI, the related intermediate regions CH, the score maps SMap, the ablation target areas ATA and their related ablation priority rank R are stored with the initial model of the heart IH in an electronic file $F_{DICOM}$, encoded in the digital imaging and communications in medicine (DICOM) image format.

In consequence of the above embodiment, the electronic file $F_{DICOM}$ might be upload to a therapy planification system or software, to prepare the intervention, or directly to a surgical navigation system.

In an optional step S6, said 3D model IH can be then displayed on a display. During the display, the score maps SMap, the regions of interest RoI and the ablation target areas ATA can be selectively displayed by the surgeon, with being superimposed to the 3D model IH.

When an ablation target area ATA is displayed, a landmark indicating its ablation priority rank R is displayed next to this ablation target area.

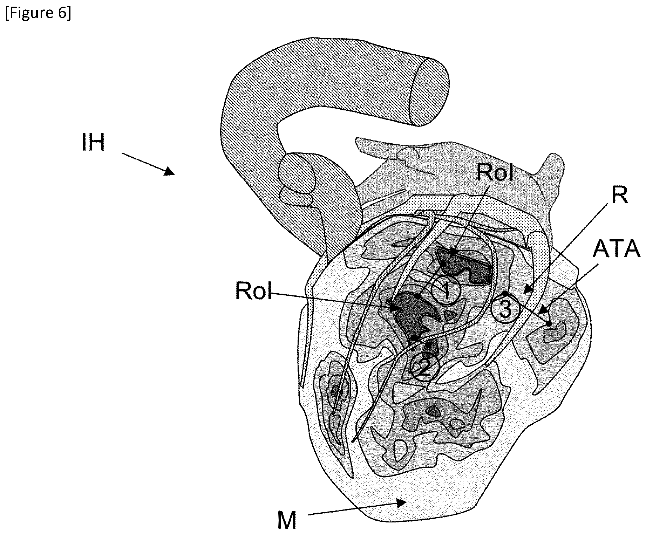

Reference is made to Figure 6 which shows the 3D model IH, the ablation target areas ATA and their related ablation priority rank R as they can be displayed.

Consequently, the surgeon can prepare the cardiac ablation using the 3D model, with an easy visualization of possible ablation area targets ATA and any further information that he may require to confirm or modify these ablation area targets ATA.

The methods disclosed herein may also be implemented by software programs executable by a computer system. Further, implementations may include distributed processing and parallel processing, especially for processing in parallel several or all data in the data sets.

The illustrations described herein are intended to provide a general understanding of the structure of various embodiments. These illustrations are not intended to serve as a complete description of all the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the disclosure and the illustrations are to be considered as illustrative rather than restrictive, and the appended claims are intended to cover all such modifications, enhancements, and other embodiments, which fall within the scope of the description. Thus, the scope of the following claims is to be determined by the broadest permissible interpretation of the claims and their equivalents and shall not be restricted or limited by the foregoing description.

**Claims**

1. A computer-implemented method for the assistance of visualization of one or more ablation target areas (ATA) in a tissue of an organ, the method comprising:

   a. (S04) step of receiving at least one mapping of points (IH) representing said tissue, each point ($M_i$) of said mapping of points being labelled with a classification ($C_i$) of at least one type of tissue at said or around point position and/or with a value of at least one first parameter ($T_i$) indicating a local characteristic of said tissue at or around said point position;
   b. (S1) step of segmentation of the mapping of points from said first parameter values and/or from said classifications to identify at least two regions of interest (RoI) in said mapping of points, each region of interest corresponding to an area of said tissue matching a predefined electrical conductivity criterion;
   c. (S2) step of computing, for each point of at least a set of points (RA) of said mapping of points, a score ($L_i$) depending on a length ($L_i$) of the shortest path ($PA_i$) joining the closest regions of interest to said point and passing by said point, said length being computed considering at least the first parameter value of said point and/or the classification of said point;

d. (S5) step of generation of a model (IH) of said tissue comprising at least said set of points and said scores and/or one or more ablation target areas determined from set of points and said scores.

2. The method according to claim 1, wherein said segmentation step (S1) comprises an iterative decrease (S11) of an electrical conductivity threshold ($TS_T$); and, for each iterative value of said electrical conductivity threshold, an identification step (S12) of two or more groups of points ($M_i$) of said mapping of points (IH), wherein each group of points is selected from their first parameter values ($T_i$) and/or from their classifications ($C_i$) so as to define an area ($RoI_i$) of said tissue having an electrical conductivity lower than said iterative value of said electrical conductivity threshold, said iterative decrease of the electrical conductivity threshold being stopped when the border of each corresponding groups of points remains globally identical from the previous iteration to the current iteration, said corresponding groups of points thus defining said regions of interest (RoI).

3. The method according to one of claims 1 to 2, wherein the step (S2) of computing the score ($L_i$) associated with a point ($M_i$) of said set of points (RA) comprises a step (S22) of computing the length ($L_i$) of the shortest path ($PA_i$) joining said point to the two closest regions of interest (RoI) to said point, the length of a path being weighted by at least the first parameter values ($T_i$) and/or the classification ($C_i$) of the points of the mapping of points through which said path encompasses.

4. The method according to claim 3, wherein the length of a path is weighted by at least the first parameter values ($T_i$) of the points of the mapping of points through which said path encompasses, wherein said first parameter value ($T_i$) associated to a point ($M_i$) of said mapping of points (IH) indicates a local thickness of said tissue at or around said point position, and wherein, when computing the length ($L_i$) of a path ($PA_i$), the weight attributed to a first point being associated with a first parameter value indicating a first thickness is higher than the weight attributed to a second point being associated with a first parameter value indicating a second thickness lower than the first thickness.

5. The method according to one of claims 3 to 4, wherein the length of a path is weighted by at least the classification ($C_i$) of the points of the mapping of points through which said path encompasses, wherein said classification ($C_i$) associated to a point ($M_i$) of said mapping of points (IH) indicates the presence of fat, calcification and/or muscle in said tissue at or around said point position, and wherein, when computing the length ($L_i$) of a path ($PA_i$), the weight attributed to a first point being associated with a first classification indicating the presence of muscles is higher than the weight attributed to a second point being associated with a second classification indicating the presence of fat and/or calcification.

6. The method according to one of claims 3 to 5, wherein the length of a path is weighted by at least the first parameter values ($T_i$) of the points of the mapping of points through which said path encompasses, wherein each point ($M_i$) of said mapping of points (IH) is labelled with a value of a second parameter ($D_i$) indicating the proximity of said point to a risk area, wherein the length ($L_i$) of a path ($PA_i$) is weighted by the first and second parameters values ($T_i$, $D_i$) of the points of the mapping of points through which said path encompasses and wherein, when computing the length of a path, the weight attributed to a first point being associated with a second parameter value indicating a first distance to a risk area is higher than the weight attributed to a second point being associated with a second parameter value indicating a second distance to said risk area lower than the first distance.

7. The method according to one of claims 1 to 6, **characterized in that** it comprises, prior to the step of scores computing (S2) and for each pair of regions of interest (RoI), a step (S21) of identification of the closest points ($M_i$) of said mapping of points (IH) to said pair of regions of interest, each set of closest points associated to a pair of regions of interest defining a set of points (RA) on which the step of scores computing is implemented to obtain a score map (SMap) of said set of points.

8. The method according to claim 7, **characterized in that** it comprises, further to the step of scores computing (S2), a step (S3) of determining from each score map (Smap), at least one ablation target area (ATA) extending between said pair of regions of interest (RoI), said ablation target area comprises each point ($M_i$) of said set of points (RA) associated to said pair of regions of interest whose score ($L_i$) is lower than a predefined threshold.

9. The method according to claim 8, **characterized in that** it comprises a step of extension of at least one of the determined ablation target areas (ATA) inside at least one of its associated regions of interest (RoI).

10. The method according to one of claims 8 or 9, **characterized in that** it comprises a step (S4) of determination, for each of the determined ablation target area (ATA), an ablation priority rank (R) based on the scores ($L_i$) of the set of points ($M_i$) defining said ablation target area, said ablation priority rank being stored in the generated tissue model (IH) with being associated to said ablation target area.

**Patentansprüche**

1. Computerimplementiertes Verfahren zur Unterstützung der Visualisierung eines oder mehrerer Ablationszielbereiche (Ablation Target Areas, ATA) in einem Gewebe eines Organs, das Verfahren umfassend:

   a. (S04) Schritt des Empfangens mindestens einer Abbildung von Punkten (IH), die das Gewebe repräsentieren, wobei jeder Punkt ($M_i$) der Abbildung von Punkten mit einer Klassifizierung ($C_i$) mindestens eines Typs von Gewebe an der oder um die Punktposition herum und/oder mit einem Wert mindestens eines ersten Parameters ($T_i$), der eine lokale Eigenschaft des Gewebes an der oder um die Punktposition herum angibt, gekennzeichnet ist;
   b. (S1) Schritt der Segmentierung der Abbildung von Punkten aus den ersten Parameterwerten und/oder aus den Klassifizierungen, um mindestens zwei Regionen von Interesse (RoI) in der Abbildung von Punkten zu identifizieren, wobei jede Region von Interesse einem Bereich des Gewebes entspricht, der ein vordefiniertes elektrisches Leitfähigkeitskriterium erfüllt;
   c. (S2) Schritt des Berechnens, für jeden Punkt mindestens eines Satzes von Punkten (RA) der Abbildung von Punkten, einer Bewertung ($L_i$), die von einer Länge ($L_i$) des kürzesten Weges ($PA_i$) abhängt, der die nächstgelegenen Regionen von Interesse mit dem Punkt verbindet und an dem Punkt vorbeiführt, wobei die Länge unter Berücksichtigung mindestens des ersten Parameterwertes des Punktes und/oder der Klassifizierung des Punktes berechnet wird;
   d. (S5) Schritt der Erzeugung eines Modells (IH) des Gewebes, umfassend mindestens den Satz von Punkten und die Bewertungen und/oder einen oder mehrere Ablationszielbereiche, die aus dem Satz von Punkten und den Bewertungen bestimmt werden.

2. Verfahren nach Anspruch 1, wobei der Segmentierungsschritt (S1) eine iterative Verringerung (S11) eines elektrischen Leitfähigkeitsschwellenwertes ($TS_T$) umfasst; und für jeden Iterationswert des elektrischen Leitfähigkeitsschwellenwertes einen Identifikationsschritt (S12) von zwei oder mehr Gruppen von Punkten ($M_i$) der Abbildung von Punkten (IH), wobei jede Gruppe von Punkten aus ihren ersten Parameterwerten ($T_i$) und/oder aus ihren Klassifizierungen ($C_i$) ausgewählt wird, um einen Bereich ($RoI_i$) des Gewebes zu definieren, der eine elektrische Leitfähigkeit aufweist, die niedriger als der Iterationswert des elektrischen Leitfähigkeitsschwellenwertes ist, wobei die iterative Verringerung des elektrischen Leitfähigkeitsschwellenwertes gestoppt wird, wenn die Grenze jeder entsprechenden Gruppe von Punkten von der vorherigen Iteration bis zur laufenden Iteration global identisch bleibt, wobei die entsprechenden Gruppen von Punkten somit die Regionen von Interesse (RoI) definieren.

3. Verfahren nach einem der Ansprüche 1 bis 2, wobei der Schritt (S2) des Berechnens der Bewertung ($L_i$), die mit einem Punkt ($M_i$) des Satzes von Punkten (RA) verknüpft ist, einen Schritt (S22) des Berechnens der Länge ($L_i$) des kürzesten Pfades ($PA_i$) umfasst, der den Punkt mit den beiden nächstgelegenen Regionen von Interesse (RoI) des Punktes verbindet, wobei die Länge eines Pfades mindestens durch die ersten Parameterwerte ($T_i$) und/oder die Klassifizierung ($C_i$) der Punkte der Abbildung von Punkten, durch die der Pfad verläuft, gewichtet wird.

4. Verfahren nach Anspruch 3, wobei die Länge eines Pfades durch mindestens die ersten Parameterwerte ($T_i$) der Punkte der Abbildung von Punkten gewichtet wird, durch die der Pfad verläuft, wobei der erste Parameterwert ($T_i$), der mit einem Punkt ($M_i$) der Abbildung von Punkten (IH) verknüpft ist, eine lokale Dicke des Gewebes an oder um die Punktposition angibt, und wobei bei der Berechnung der Länge ($L_i$) eines Pfades ($PA_i$) die Gewichtung, die einem ersten Punkt zugeordnet ist, der mit einem ersten Parameterwert verknüpft ist, der eine erste Dicke angibt, höher ist als die Gewichtung, die einem zweiten Punkt zugeordnet ist, der mit einem ersten Parameterwert verknüpft ist, der eine zweite Dicke angibt, die niedriger ist als die erste Dicke.

5. Verfahren nach einem der Ansprüche 3 bis 4, wobei die Länge eines Pfades mindestens durch die Klassifizierung ($C_i$) der Punkte der Abbildung von Punkten gewichtet wird, durch die der Pfad verläuft, wobei die Klassifizierung (Ci), die mit einem Punkt ($M_i$) der Abbildung von Punkten (IH) verknüpft ist, das Vorhandensein von Fett, Verkalkung und/oder Muskel in dem Gewebe an oder um die Position des Punktes angibt, und wobei bei der Berechnung der Länge ($L_i$) eines Pfades ($PA_i$) die Gewichtung, die einem ersten Punkt zugeordnet ist, der mit einer ersten Klassifizierung verknüpft ist, die das Vorhandensein von Muskel angibt, höher ist als die Gewichtung, die einem zweiten Punkt zugeordnet ist, der mit einer zweiten Klassifizierung verknüpft ist, die das Vorhandensein von Fett und/oder Verkalkung angibt.

6. Verfahren nach einem der Ansprüche 3 bis 5, wobei die Länge eines Pfades gewichtet wird durch mindestens die ersten Parameterwerte ($T_i$) der Punkte

der Abbildung von Punkten gewichtet wird, durch die der Pfad verläuft, wobei jeder Punkt ($M_i$) der Abbildung von Punkten (IH) mit einem Wert eines zweiten Parameters ($D_i$) gekennzeichnet ist, der die Nähe des Punktes zu einem Risikobereich angibt, wobei die Länge ($L_j$) eines Pfades ($PA_i$) durch die ersten und zweiten Parameterwerte ($T_i$, $D_i$) der Punkte der Abbildung von Punkten gewichtet wird, durch die der Pfad verläuft, wobei bei der Berechnung der Länge eines Pfades das Gewicht, das einem ersten Punkt zugeordnet ist, der mit einem zweiten Parameterwert verknüpft ist, der eine erste Entfernung zu einem Risikobereich angibt, höher ist als das Gewicht, das einem zweiten Punkt zugewiesen wird, der mit einem zweiten Parameterwert verknüpft ist, der eine zweite Entfernung zu dem Risikobereich angibt, die geringer ist als die erste Entfernung.

7. Verfahren nach einem der Ansprüche 1 bis 6, **dadurch gekennzeichnet, dass** es vor dem Schritt der Bewertungsberechnung (S2) und für jedes Paar von Regionen von Interesse (RoI) einen Schritt (S21) der Identifizierung der nächstgelegenen Punkte (Mi) der Abbildung von Punkten (IH) zu dem Paar von Regionen von Interesse umfasst, wobei jeder Satz von nächstgelegenen Punkten, der mit einem Paar von Regionen von Interesse verknüpft ist, einen Satz von Punkten (RA) definiert, an dem der Schritt der Bewertungsberechnung implementiert wird, um eine Bewertungskarte (SMap) des Satzes von Punkten zu erhalten.

8. Verfahren nach Anspruch 7, **dadurch gekennzeichnet, dass** es ferner neben dem Schritt der Bewertungsberechnung (S2) einen Schritt (S3) des Bestimmens aus jeder Bewertungskarte (Smap) mindestens eines Ablationszielbereichs (ATA) umfasst, der sich zwischen dem Paar von Regionen von Interesse (RoI) erstreckt, wobei der Ablationszielbereich jeden Punkt ($M_i$) des Satzes von Punkten (RA) umfasst, der mit dem Paar von Regionen von Interesse verknüpft ist, dessen Bewertung ($L_i$) niedriger als ein vordefinierter Schwellenwert ist.

9. Verfahren nach Anspruch 8, **dadurch gekennzeichnet, dass** es einen Schritt der Ausdehnung von mindestens einem der bestimmten Ablationszielbereiche (ATA) innerhalb mindestens einer seiner verknüpften Regionen von Interesse (RoI) umfasst.

10. Verfahren nach einem der Ansprüche 8 oder 9, **dadurch gekennzeichnet, dass** es einen Schritt (S4) der Bestimmung, für jeden der bestimmten Ablationszielbereiche (ATA), eines Ablationsprioritätsrangs (R) basierend auf den Bewertungen ($L_i$) des Satzes von Punkten ($M_i$), die den Ablationszielbereich definieren, umfasst, wobei der Ablationsprioritätsrang in dem erzeugten Gewebemodell (IH) gespeichert wird, das mit dem Ablationszielbereich verknüpft ist.

## Revendications

1. Procédé implémenté par ordinateur destiné à faciliter la visualisation d'une ou plusieurs zones cibles d'ablation (ATA) dans un tissu d'un organe, le procédé comprenant :

   a. (S04) étape de réception d'au moins un mappage de points (IH) représentant ledit tissu, chaque point ($M_i$) dudit mappage de points étant étiqueté avec une classification ($C_i$) d'au moins un type de tissu au niveau ou autour de ladite position de point et/ou avec une valeur d'au moins un premier paramètre ($T_i$) indiquant une caractéristique locale dudit tissu au niveau ou autour de ladite position de point ;
   b. (S1) étape de segmentation du mappage de points à partir desdites premières valeurs de paramètres et/ou à partir desdites classifications pour identifier au moins deux régions d'intérêt (RoI) dans ledit mappage de points, chaque région d'intérêt correspondant à une zone dudit tissu correspondant à un critère de conductivité électrique prédéfini ;
   c. (S2) étape de calcul, pour chaque point d'au moins un ensemble de points (RA) dudit mappage de points, d'un score ($L_i$) en fonction d'une longueur ($L_i$) du chemin le plus court ($PA_i$) reliant les régions d'intérêt les plus proches dudit point et passant par ledit point, ladite longueur étant calculée en tenant compte au moins de la première valeur de paramètre dudit point et/ou de la classification dudit point ;
   d. (S5) étape de génération d'un modèle (IH) dudit tissu comprenant au moins ledit ensemble de points et lesdits scores et/ou une ou plusieurs zones cibles d'ablation déterminées à partir dudit ensemble de points et desdits scores.

2. Procédé selon la revendication 1, dans lequel ladite étape de segmentation (S1) comprend une diminution itérative (S11) d'un seuil de conductivité électrique (TSt) ; et, pour chaque valeur itérative dudit seuil de conductivité électrique, une étape d'identification (S12) de deux ou plusieurs groupes de points ($M_i$) dudit mappage de points (IH), dans lequel chaque groupe de points est choisi à partir de ses premières valeurs de paramètres ($T_i$) et/ou de ses classifications ($C_i$) de manière à définir une zone ($RoI_i$) dudit tissu ayant une conductivité électrique inférieure à ladite valeur itérative dudit seuil de conductivité électrique, ladite diminution itérative du seuil de conductivité électrique étant arrêtée lorsque la limite de chaque groupe de points correspondant reste globalement identique de l'itération précédente à l'itération actuelle, lesdits groupes de points correspondants définissant ainsi lesdites régions d'intérêt (RoI).

3. Procédé selon l'une des revendications 1 à 2, dans lequel l'étape (S2) de calcul du score ($L_i$) associé à un point ($M_i$) dudit ensemble de points (RA) comprend une étape (S22) de calcul de la longueur ($L_i$) du chemin le plus court ($PA_i$) reliant ledit point aux deux régions d'intérêt (RoI) les plus proches dudit point, la longueur d'un chemin étant pondérée par au moins les premières valeurs de paramètres ($T_i$) et/ou la classification ($C_i$) des points du mappage de points que ledit chemin englobe.

4. Procédé selon la revendication 3, dans lequel la longueur d'un chemin est pondérée par au moins les premières valeurs de paramètres ($T_i$) des points du mappage de points que ledit chemin englobe, dans lequel ladite première valeur de paramètre ($T_i$) associée à un point ($M_i$) dudit mappage de points (IH) indique une épaisseur locale dudit tissu au niveau ou autour de ladite position de point, et dans lequel, lors du calcul de la longueur ($L_i$) d'un chemin ($PA_i$), le poids attribué à un premier point étant associé à une première valeur de paramètre indiquant une première épaisseur est supérieur au poids attribué à un second point étant associé à une première valeur de paramètre indiquant une seconde épaisseur inférieure à la première épaisseur.

5. Procédé selon l'une des revendications 3 à 4, dans lequel la longueur d'un chemin est pondérée par au moins la classification ($C_i$) des points du mappage de points que ledit chemin englobe, dans lequel ladite classification ($C_i$) associée à un point ($M_i$) dudit mappage de points (IH) indique la présence de graisse, de calcification et/ou de muscle dans ledit tissu au niveau ou autour de ladite position de point, et dans lequel, lors du calcul de la longueur ($L_i$) d'un chemin ($PA_i$), le poids attribué à un premier point étant associé à une première classification indiquant la présence de muscles est supérieur au poids attribué à un second point étant associé à une seconde classification indiquant la présence de graisse et/ou de calcification.

6. Procédé selon l'une des revendications 3 à 5, dans lequel la longueur d'un chemin est pondérée par au moins les premières valeurs de paramètres ($T_i$) des points du mappage des points que ledit chemin englobe, dans lequel chaque point ($M_i$) dudit mappage de points (IH) est étiqueté avec une valeur d'un second paramètre ($D_i$) indiquant la proximité dudit point à une zone à risque, dans lequel la longueur ($L_j$) d'un chemin ($PA_i$) est pondérée par les première et seconde valeurs de paramètres ($T_i$, $D_i$) des points du mappage des points que ledit chemin englobe et dans lequel, lors du calcul de la longueur d'un chemin, le poids attribué à un premier point étant associé à une seconde valeur de paramètre indiquant une première distance par rapport à une zone à risque est supérieur au poids attribué à un second point étant associé à une seconde valeur de paramètre indiquant une seconde distance par rapport à ladite zone à risque inférieure à la première distance.

7. Procédé selon l'une des revendications 1 à 6, **caractérisé en qu'**il comprend, avant l'étape de calcul des scores (S2) et pour chaque paire de régions d'intérêt (RoI), une étape (S21) d'identification des points les plus proches ($M_i$) dudit mappage de points (IH) par rapport à ladite paire de régions d'intérêt, chaque ensemble de points les plus proches associé à une paire de régions d'intérêt définissant un ensemble de points (RA) sur lequel l'étape de calcul des scores est implémentée pour obtenir un mappage de scores (SMap) dudit ensemble de points.

8. Procédé selon la revendication 7, **caractérisé en ce qu'**il comprend, à la suite de l'étape de calcul des scores (S2), une étape (S3) de détermination à partir de chaque mappage de scores (Smap), d'au moins une zone cible d'ablation (ATA) s'étendant entre ladite paire de régions d'intérêt (RoI), ladite zone cible d'ablation comprenant chaque point ($M_i$) dudit ensemble de points (RA) associé à ladite paire de régions d'intérêt dont le score ($L_i$) est inférieur à un seuil prédéfini.

9. Procédé selon la revendication 8, **caractérisé en ce qu'**il comprend une étape d'extension d'au moins l'une parmi les zones cibles d'ablation (ATA) déterminées à l'intérieur d'au moins l'une de ses régions d'intérêt (RoI) associées.

10. Procédé selon l'une des revendications 8 ou 9, **caractérisé en ce qu'**il comprend une étape (S4) de détermination, pour chacune des zones cibles d'ablation (ATA) déterminées, d'un rang de priorité d'ablation (R) en fonction des scores ($L_i$) de l'ensemble de points ($M_i$) définissant ladite zone cible d'ablation, ledit rang de priorité d'ablation étant stocké dans le modèle de tissu généré (IH) en étant associé à ladite zone cible d'ablation.

[Figure 1]

[Figure 2]

[Figure 3]

[Figure 4]

[Figure 5]

[Figure 6]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3622478 A

**Non-patent literature cited in the description**

- Mind the gap: Quantification of incomplete ablation patterns after pulmonary vein isolation using minimum path search. **NUÑEZ-GARCIA MARTA et al.** Medical Image Analysis. Oxford University Press, 10 October 2018, vol. 51, 1-12